(19) Europäisches Patentamt / European Patent Office / Office européen des brevets

(11) **EP 2 608 201 B1**

(12) **EUROPEAN PATENT SPECIFICATION**

(45) Date of publication and mention
of the grant of the patent:
**01.06.2022 Bulletin 2022/22**

(21) Application number: **12194568.7**

(22) Date of filing: **28.11.2012**

(51) International Patent Classification (IPC):
**G10L 25/84** *(2013.01)* **H04R 3/00** *(2006.01)*
**G10L 21/0216** *(2013.01)*

(52) Cooperative Patent Classification (CPC):
**H04R 3/005; G10L 25/84;** G10L 2021/02168;
H04R 2410/07; H04R 2499/11

(54) **Signal processing apparatus and signal processing method**

Signalverarbeitungsvorrichtung und Signalverarbeitungsverfahren

Appareil et procédé de traitement de signal

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2011 JP 2011274742**

(43) Date of publication of application:
**26.06.2013 Bulletin 2013/26**

(73) Proprietor: **FUJITSU LIMITED
Kawasaki-shi,
Kanagawa 211-8588 (JP)**

(72) Inventor: **Matsuo, Naoshi
Kanagawa, 211-8588 (JP)**

(74) Representative: **Hoffmann Eitle
Patent- und Rechtsanwälte PartmbB
Arabellastraße 30
81925 München (DE)**

(56) References cited:
**EP-A1- 1 450 353 EP-A1- 1 940 196
US-A- 4 334 740 US-A1- 2003 120 485
US-A1- 2008 212 794**

**Description**

FIELD

The embodiments discussed herein are directed to signal processing apparatuses and signal processing methods.

BACKGROUND

When wind hits a microphone, a diaphragm included in the microphone vibrates largely, so that noise is included in an input signal. Here, if noise is included in the input signal, when speech recognition is performed or a hands-free phone call is made, the accuracy of the speech recognition and the quality of the phone call degrade. Therefore, in conventional speech recognition and a hands-free phone call, a conventional apparatus which suppresses irregular noise generated when wind hits the microphone is used.

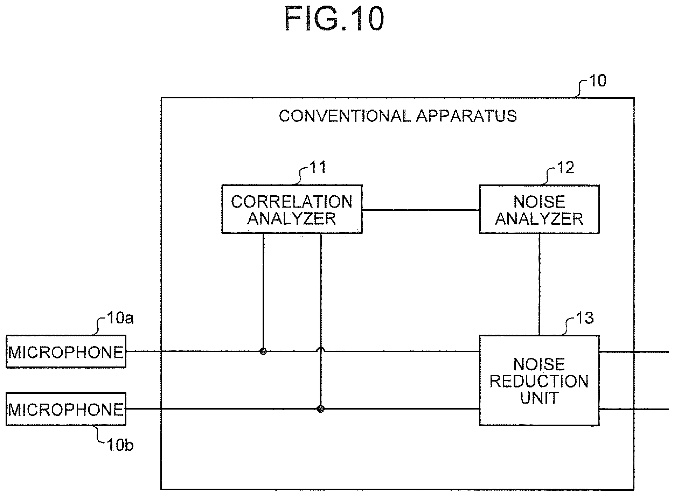

FIG. 10 is a diagram illustrating an example of the conventional apparatus. As illustrated in FIG. 10, a conventional apparatus 10 is connected to microphones 10a and 10b. The microphones 10a and 10b are spaced apart from each other by a predetermined distance. The conventional apparatus 10 includes a correlation analyzer 11, a noise analyzer 12, and a noise reduction unit 13.

The microphone 10a is a microphone which converts collected sound into an input signal Lin(t) and outputs the input signal Lin(t) to the conventional apparatus 10. The microphone 10b is a microphone which converts collected sound into an input signal Rin(t) and outputs the input signal Rin(t) to the conventional apparatus 10. Here, t corresponds to a sampling number of the input signal.

The correlation analyzer 11 calculates a correlation value r(t) between the input signal Lin(t) and the input signal Rin(t) by using the formula (1). In the formula (1), the correlation analyzer 11 sequentially changes the value of i from 1 to n and calculates a correlation value r(t). For example, the value of n is 128. The correlation analyzer 11 outputs the correlation value r(t) to the noise analyzer 12.

$$r(t) = \Sigma Lin(t-i)Rin(t-i)/$$

$$((\Sigma Lin(t-i)^2)^{1/2}(\Sigma Rin(t-i)^2)^{1/2}) \qquad (1)$$

When the value of the correlation value r(t) is small, the noise analyzer 12 determines that there is noise of wind and outputs control information to turn down volume to the noise reduction unit 13.

The noise reduction unit 13 adjusts the volumes of the input signals Lin(t) and Rin(t) and outputs the input signals Lin(t) and Rin(t) to an external apparatus. For example, when the noise reduction unit 13 receives the control information to turn down volume, the noise reduction unit 13 turns down the volumes of the input signals Lin(t) and Rin(t) and outputs the input signals Lin(t) and Rin(t) to an external apparatus.

Patent Document 1: Japanese Laid-open Patent Publication No. 2004-289762
Patent Document 2: Japanese Laid-open Patent Publication No. 2009-005133

However, in the conventional technique described above, there is a problem that noise included in a target input signal such as voice is not sufficiently suppressed.

For example, in the conventional technique, when wind blowing against the microphone is strong, the noise of the input signal can be suppressed. However, when wind blowing against the microphone is weak, the difference of correlation coefficient between a section including voice and a section including wind hitting noise is small, so that the noise is not accurately suppressed.

Document US 2008/212794 A1 relates to a signal processing apparatus including sound collecting elements, a noise detector for detecting a level of noise in a low-frequency band of audio signals output from the sound collecting elements, a noise reduction unit for reducing the noise in the audio signals in accordance with a signal output from the noise detector, a converter for converting the audio signals output from the noise reduction unit into pieces of audio data corresponding to channels including a low-frequency channel and other channels, a low-frequency channel controller for controlling a level of the audio data corresponding to the low-frequency channel in accordance with the level of the noise detected using the noise detector; and a level controller for controlling the level of the audio data of the low-frequency channel output from the low-frequency channel controller and levels of the pieces of audio data corresponding to the other channels output from the converter.

Document US 4,334,740 A describes a sound receiving system having an array of microphone elements for producing output signals in response to incident sound, and signal processing means for processing the output signals to provide the array with pre-selected directional acceptance and rejection characteristics.

Document EP 1 940 196 A1 relates to an audio signal processing apparatus including first, second and third omni-directional microphones which are spaced apart by a predetermined distance, a first adder section to generate an audio signal having an omni-directivity in the whole circumferential direction, a first subtractor section to generate an audio signal having a directivity in the right-left direction, a second adder section that adds audio signals generated by the first and third omni-directional microphones, a second subtractor section to generate an audio signal having a directivity in the front-back direction, and an output section that adds the audio signal resulting from the multiplication of the audio signal having a directivity in the whole circumferential direction by a predetermined coefficient.

Accordingly, it is an object in one aspect of an embodiment of the invention to provide a signal processing apparatus and a signal processing method that can sufficiently suppress the noise included in the input signal.

SUMMARY

The present invention provides a signal processing apparatus according to claim 1, a signal processing apparatus according to claim 2, a signal processing method according to claim 11, a signal processing method according to claim 12, and a signal processing program according to claim 13. Optional features are set out in the remaining claims.

BRIEF DESCRIPTION OF DRAWINGS

FIG. 1 is a diagram illustrating a configuration of a signal processing apparatus according to a first embodiment;
FIG. 2 is a flowchart illustrating a processing procedure of the signal processing apparatus according to the first embodiment;
FIG. 3 is a diagram for explaining an effect of an embodiment of the present invention compared with a conventional apparatus;
FIG. 4 is a diagram illustrating a configuration of a signal processing apparatus according to a second embodiment;
FIG. 5 is a flowchart illustrating a processing procedure of the signal processing apparatus according to the second embodiment;
FIG. 6 is a diagram illustrating a configuration of a signal processing apparatus according to a third embodiment;
FIG. 7 is a flowchart illustrating a processing procedure of the signal processing apparatus according to the third embodiment;
FIG. 8 is a diagram for explaining another process of a gain calculator;
FIG. 9 is a diagram illustrating an example of a computer that executes a signal processing program; and
FIG. 10 is a diagram illustrating an example of a conventional apparatus.

DESCRIPTION OF EMBODIMENTS

Preferred embodiments of the present invention will be explained with reference to accompanying drawings. The present invention is not limited by the embodiments.

[a] First Embodiment

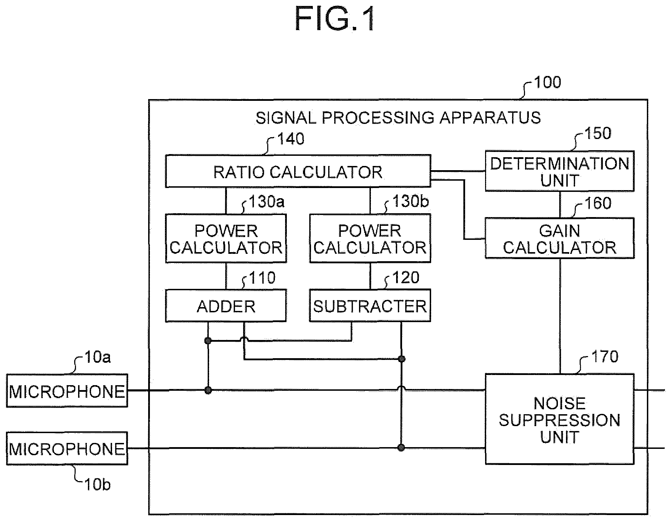

FIG. 1 is a diagram illustrating a configuration of a signal processing apparatus according to a first embodiment. As illustrated in FIG. 1, a signal processing apparatus 100 is connected to microphones 10a and 10b. The microphones 10a and 10b are spaced apart from each other by a predetermined distance.

The signal processing apparatus 100 includes an adder 110, a subtracter 120, and power calculators 130a and 130b. The signal processing apparatus 100 also includes a ratio calculator 140, a determination unit 150, a gain calculator 160, and a noise suppression unit 170.

The microphone 10a is a microphone which converts collected sound into an input signal Lin(t) and outputs the input signal Lin(t) to the signal processing apparatus 100. The microphone 10b is a microphone which converts collected sound into an input signal Rin(t) and outputs the input signal Rin(t) to the signal processing apparatus 100. Here, t corresponds to a sampling number of the input signal.

The adder 110 calculates an added value p(t) by adding the input signal Lin(t) and the input signal Rin(t) together. The added value p(t) is represented by the formula (2). The adder 110 outputs the added value p(t) to the power calculator 130a.

$$p(t) = Lin(t) + Rin(t) \qquad (2)$$

The subtracter 120 calculates an subtracted value m(t) by subtracting the input signal Rin(t) from the input signal Lin(t). The subtracted value m(t) is represented by the formula (3). The subtracter 120 outputs the subtracted value m(t) to the power calculator 130b.

$$m(t) = Lin(t) - Rin(t) \qquad (3)$$

The power calculator 130a calculates a power Ppow(t) by summing up squared values of the added value p(t) of different sampling numbers. The power Ppow(t) is represented by the formula (4). The power calculator 130a sequentially changes the value of j from 1 to n and calculates the power Ppow(t). The value of n is a natural number. For example, the value of n is 128. The power calculator 130a outputs the power Ppow(t) to the ratio calculator 140.

$$Ppow(t) = \Sigma p(t-j)^2 \qquad (4)$$

The power calculator 130b calculates a power Mpow(t) by summing up squared values of the subtracted value m(t) of different sampling numbers. The power Mpow(t) is represented by the formula (5). The power calculator 130b sequentially changes the value of j from 1 to n and calculates the power Mpow(t). The value of n is a natural number. For example, the value of n is 128. The power calculator 130b outputs the power Mpow(t) to the ratio calculator 140.

$$Mpow(t) = \Sigma m(t-j)^2 \qquad (5)$$

The ratio calculator 140 calculates a ratio v(t) of the power Ppow(t) and the power Mpow(t). For example, the ratio calculator 140 calculates the ratio v(t) by the formula (6). The ratio calculator 140 outputs the ratio v(t) to the determination unit 150 and the gain calculator 160. Here, v(t) may be a square root of the ratio of the power Ppow(t) and the power Mpow(t).

$$v(t) = Mpow(t)/Ppow(t) \qquad (6)$$

The determination unit 150 determines whether noise is included in the input signals Lin(t) and Rin(t) based on the ratio v(t). When the value of the ratio v(t) is greater than or equal to a predetermined threshold value, the determination unit 150 determines that noise is included in the input signals Lin(t) and Rin(t). The determination unit 150 outputs a determination result to the gain calculator 160.

The gain calculator 160 calculates a gain based on the ratio v(t). The gain calculator 160 first calculates g'(t) by the formula (7) and thereafter calculates a gain g(t) by the formula (8).

$$g'(t) = 1 - v(t) \qquad (7)$$

$$g(t) = \max(g'(t), \alpha) \qquad (8)$$

In the formula (8), $\alpha$ is a lower limit value greater than or equal to 0 and smaller than or equal to 1. The gain calculator 160 calculates g'(t) and thereafter calculates the larger value of g'(t) and $\alpha$ as the gain g(t). The gain calculator 160 outputs the gain g(t) to the noise suppression unit 170.

The gain calculator 160 may calculate the gain g(t) when noise is included in the input signals Lin(t) and Rin(t) based on the determination result of the determination unit 150. On the other hand, when noise is not included in the input signals Lin(t) and Rin(t), the gain calculator 160 may set 1 to the gain g(t) and output the gain g(t) to the noise suppression unit 170.

The noise suppression unit 170 suppresses noise by multiplying the input signals Lin(t) and Rin(t) by the gain g(t). For example, the noise suppression unit 170 generates output signals Lout(t) and Rout(t) from the input signals Lin(t) and Rin(t) and outputs the generated signals to an external apparatus. For example, the output signals Lout(t) and Rout(t) are represented by the formula (9) and the formula (10).

$$Lout(t) = g(t)Lin(t) \tag{9}$$

$$Rout(t) = g(t)Rin(t) \tag{10}$$

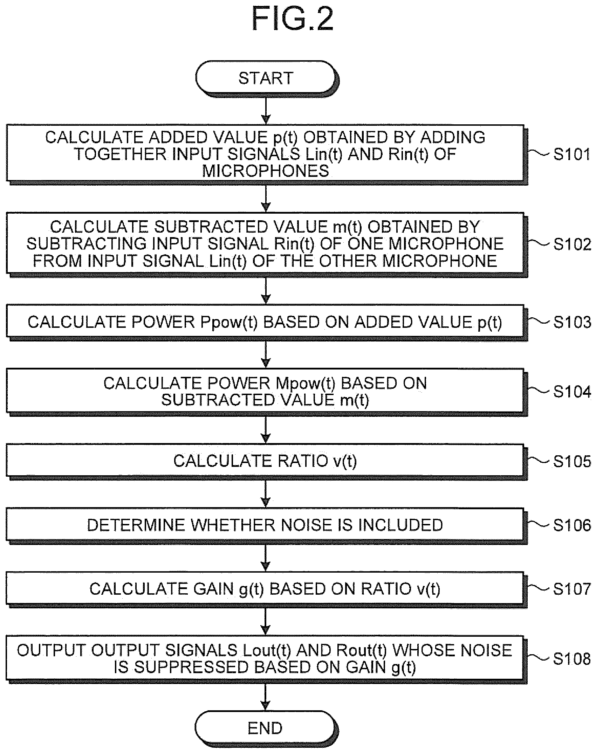

Next, a processing procedure of the signal processing apparatus 100 according to the first embodiment will be described. FIG. 2 is a flowchart illustrating a processing procedure of the signal processing apparatus according to the first embodiment. For example, the process illustrated in FIG. 2 is performed when input signals are received from the microphones 10a and 10b.

As illustrated in FIG. 2, the signal processing apparatus 100 calculates the added value p(t) obtained by adding together the input signals Lin(t) and Rin(t) of the microphones 10a and 10b (step S101). The signal processing apparatus 100 calculates the subtracted value m(t) obtained by subtracting the input signal Rin(t) of one microphone 10b from the input signal Lin(t) of the other microphone 10a (step S102).

The signal processing apparatus 100 calculates the power Ppow(t) based on the added value p(t) (step S103). The signal processing apparatus 100 calculates the power Mpow(t) based on the subtracted value m(t) (step S104).

The signal processing apparatus 100 calculates the ratio v(t) (step S105) and determines whether noise is included (step S106). The signal processing apparatus 100 calculates the gain g(t) based on the ratio v(t) (step S107). The signal processing apparatus 100 outputs the output signals Lout(t) and Rout(t) whose noise is suppressed based on the gain g(t) (step S108).

Next, effects of the signal processing apparatus 100 according to the first embodiment will be described. In the signal processing apparatus 100, the determination unit 150 determines whether noise is included in the input signals Lin(t) and Rin(t) based on the added value p(t) calculated by the adder 110 and the subtracted value m(t) calculated by the subtracter 120. Therefore, it is possible to accurately determine whether noise is included, so that noise included in the input signals can be sufficiently suppressed by using the determination result.

Generally, the lower the frequency, the stronger the correlation between the input signals. This is because the lower the frequency, the smaller the variation of waveforms in the time axis direction, so that the waveforms have similar shapes. An extreme example is a direct current. Therefore, in order to strengthen the correlation, the adder 110 sums up the input signals. On the other hand, in order to suppress the correlation, the subtracter 120 subtracts one input signal from the other input signal.

Therefore, for example, in a case where the input signals of the microphone have a correlation, such as cases of voice and noise in a driving car, a relationship of the formula (11) is established.

$$\text{"power of } (Lin(t)+Rin(t))\text{"} \gg$$
$$\text{"power of } (Lin(t)-Rin(t))\text{"} \tag{11}$$

On the other hand, in a case where the correlation between the input signals of the microphone is weak, such as case of wind hitting noise, a relationship of the formula (12) is established.

$$\text{"power of } (Lin(t)+Rin(t))\text{"} \approx$$
$$\text{"power of } (Lin(t)-Rin(t))\text{"} \tag{12}$$

Therefore, in the signal processing apparatus 100 according to the first embodiment, noise can be accurately detected by using the ratio of the "power of (Lin(t)-Rin(t))" based on the "power of (Lin(t)+Rin(t))". Also, an appropriate gain can be calculated by using the ratio of the "power of (Lin(t)-Rin(t))" based on the "power of (Lin(t)+Rin(t))", and a noise component included in the input signals can be suppressed by using the gain.

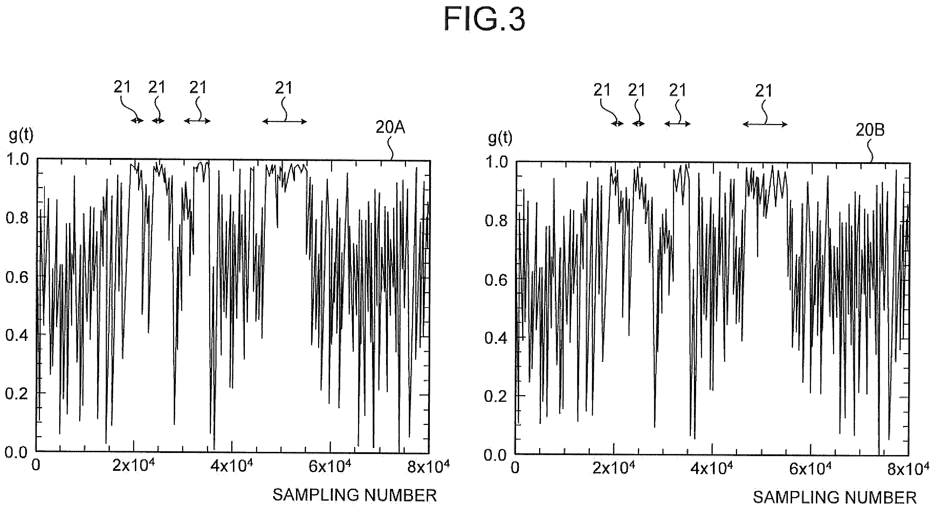

FIG. 3 is a diagram for explaining an effect of an embodiment of the present invention compared with a conventional apparatus. Signals 20A in FIG. 3 indicates a relationship between the sampling number and the gain g(t) of the conventional apparatus. Signals 20B in FIG. 3 indicates a relationship between the sampling number and the gain g(t) of the signal processing apparatus 100. Sections 21 in the signals 20A and 20B are sections including voice. When comparing the signals 20A and 20B, in the signals 20B, the gain g(t) in sections including only wind hitting noise is reduced while the gain g(t) in the sections 21 is substantially maintained at 1. Therefore, in the present embodiment, it is possible to turn down volume of a part of input signals including noise without turning down volume of whole input signals in voice sections.

By the way, in the signal processing apparatus 100 according to the first embodiment, the determination unit 150 determines whether noise is included based on the value of the ratio v(t). However, it is not limited to this. The determination unit 150 may obtain a difference between the Ppow(t) and the Mpow(t), and when the difference value is smaller than a predetermined threshold value, the determination unit 150 may determine that noise is included in the input signals.

The signal processing apparatus 100 may be configured by integrating the determination unit 150 and the gain calculator 160 together.

[b] Second Embodiment

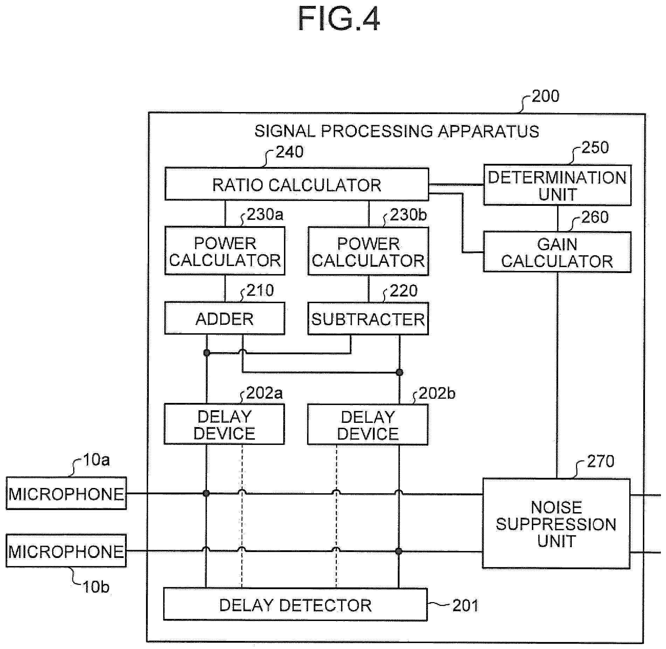

Next, a signal processing apparatus according to a second embodiment will be described. FIG. 4 is a diagram illustrating a configuration of the signal processing apparatus according to the second embodiment. As illustrated in FIG. 4, a signal processing apparatus 200 is connected to the microphones 10a and 10b. The microphones 10a and 10b are spaced apart from each other by a predetermined distance. The description about the microphones 10a and 10b is the same as that in the first embodiment.

The signal processing apparatus 200 includes a delay detector 201 and delay devices 202a and 202b. The signal processing apparatus 200 also includes an adder 210, a subtracter 220, and power calculators 230a and 230b. The signal processing apparatus 200 also includes a ratio calculator 240, a determination unit 250, a gain calculator 260, and a noise suppression unit 270.

The delay detector 201 calculates a correlation coefficient c(d) between the input signal Lin(t) and the input signal Rin(t) by the formula (13). The delay detector 201 changes a delay amount d and detects a delay amount dmax by which the value of correlation coefficient c(d) is the maximum.

$$c(d) = \Sigma Lin(t)Rin(t-d)/$$

$$((\Sigma Lin(t)^2)^{1/2}(\Sigma Rin(t-d)^2)^{1/2}) \qquad (13)$$

After detecting the dmax, the delay detector 201 calculates a delay amount dL applied to the input signal from the microphone 10a and a delay amount dR applied to the input signal from the microphone 10b in order to synchronize the input signals inputted from the microphones 10a and 10b. A calculation example of the delay amounts dL and dR will be described below.

When the value of the dmax is greater than or equal to 0, the delay detector 201 sets the value of dL to 0 and sets the value of dR to the value of the dmax. Then, the delay detector 201 outputs the dL to the delay device 202a and outputs the dR to the delay device 202b.

On the other hand, when the value of the dmax is smaller than 0, the delay detector 201 sets the value of dL to the absolute value of the dmax and sets the value of dR to 0. Then, the delay detector 201 outputs the dL to the delay device 202a and outputs the dR to the delay device 202b.

The delay device 202a performs a delay process of the input signal Lin(t) from the microphone 10a. The delay device 202a outputs an input signal Lin(t-dL) obtained by performing a delay process on the input signal Lin(t) to the adder 210 and the subtracter 220.

The delay device 202b performs a delay process of the input signal Rin(t) from the microphone 10b. The delay device 202b outputs an input signal Rin(t-dR) obtained by performing a delay process on the input signal Rin(t) to the adder 210 and the subtracter 220.

The adder 210 calculates an added value p(t) by adding together the input signals Lin(t-dL) and Rin(t-dR) whose delay amounts are adjusted. The adder 210 outputs the added value p(t) to the power calculator 230a.

The subtracter 220 calculates an subtracted value m(t) by subtracting the input signal Rin(t-dR) from the input signal Lin(t-dL). The subtracter 220 outputs the subtracted value m(t) to the power calculator 230b.

The descriptions about the power calculators 230a and 230b, the ratio calculator 240, the determination unit 250, the gain calculator 260, and the noise suppression unit 270 are the same as those of the power calculators 130a and 130b, the ratio calculator 140, the determination unit 150, the gain calculator 160, and the noise suppression unit 170 illustrated in FIG. 1.

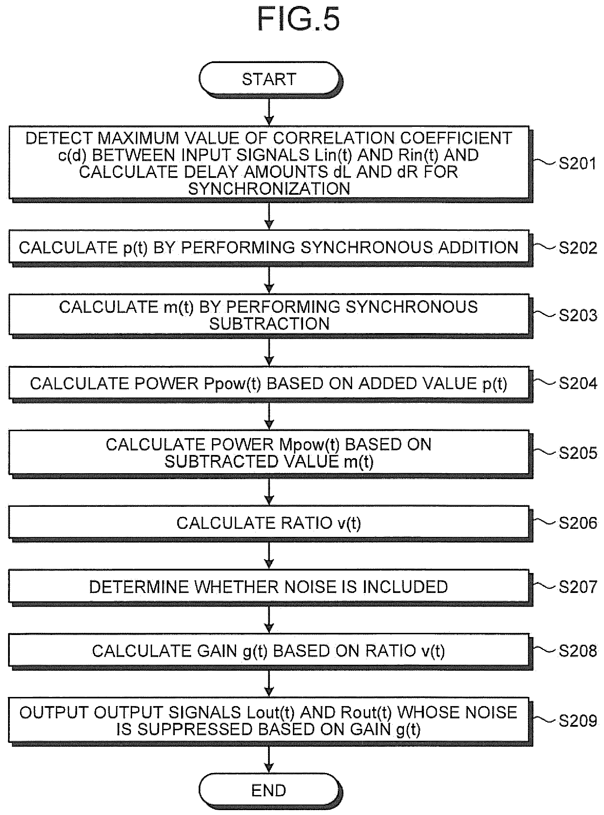

Next, a processing procedure of the signal processing apparatus 200 according to the second embodiment will be described. FIG. 5 is a flowchart illustrating the processing procedure of the signal processing apparatus according to the second embodiment. For example, the process illustrated in FIG. 5 is performed when input signals are received from the microphones 10a and 10b.

The signal processing apparatus 200 detects the maximum value of the correlation coefficient c(d) between the input signal Lin(t) and the input signal Rin(t) and calculates the delay amounts dL and dR for synchronization (step S201). The signal processing apparatus 200 calculates the p(t) by performing synchronous addition (step S202) and calculates the m(t) by performing synchronous subtraction (step S203).

The signal processing apparatus 200 calculates the power Ppow(t) based on the added value p(t) (step S204). The signal processing apparatus 200 calculates the power Mpow(t) based on the subtracted value m(t) (step S205).

The signal processing apparatus 200 calculates the ratio v(t) (step S206) and determines whether noise is included (step S207). The signal processing apparatus 200 calculates the gain g(t) based on the ratio v(t) (step S208). The signal processing apparatus 200 outputs the output signals Lout(t) and Rout(t) whose noise is suppressed based on the gain g(t) (step S209).

Next, effects of the signal processing apparatus 200 according to the second embodiment will be described. In the signal processing apparatus 200, the delay detector 201 calculates the delay amounts dL and dR and the delay devices 202a and 202b synchronize the input signals. In the signal processing apparatus 200, the determination unit 250 determines whether noise is included in the input signals Lin(t) and Rin(t) based on the added value p(t) calculated by the adder 210 and the subtracted value m(t) calculated by the subtracter 220. Therefore, even if the timings when voice of a user is collected by the microphones 10a and 10b are different from each other, the input signals can be synchronized by adjusting the delay amounts. Thus, it is possible to accurately determine whether noise is included in a direction of a user whose voice is desired to be recorded, so that noise included in the input signals can be suppressed by using the determination result.

[c] Third Embodiment

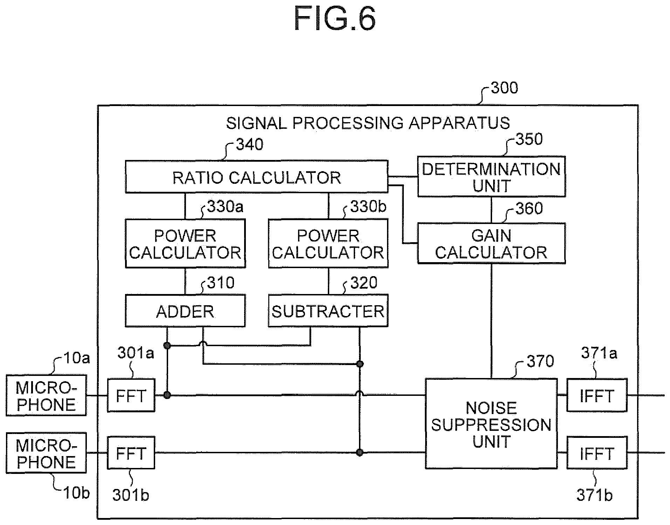

Next, a signal processing apparatus according to the third embodiment will be described. FIG. 6 is a diagram illustrating a configuration of the signal processing apparatus according to the third embodiment. As illustrated in FIG. 6, a signal processing apparatus 300 is connected to the microphones 10a and 10b. The microphones 10a and 10b are spaced apart from each other by a predetermined distance. The description about the microphones 10a and 10b is the same as that in the first embodiment.

The signal processing apparatus 300 includes FFTs (Fast Fourier Transforms) 301a and 301b, an adder 310, a subtracter 320, and power calculators 330a and 330b. The signal processing apparatus 300 also includes a ratio calculator 340, a determination unit 350, a gain calculator 360, a noise suppression unit 370, and IFFTs (Inverse FFTs) 371a and 371b.

The FFT 301a positions a Hanning window with 50% overlap on the input signal Lin(t) acquired from the microphone 10a and converts the input signal Lin(t) into a signal on the frequency axis by fast Fourier transform. The input signal Lin(t) converted into a signal on the frequency axis is represented as LIN(i, f). Here, i is a number of an analysis frame on which FFT is performed and f indicates the frequency. The FFT 301a outputs the LIN(i, f) to the adder 310, the subtracter 320, and the noise suppression unit 370.

The FFT 301b positions a Hanning window with 50% overlap on the input signal Rin(t) acquired from the microphone 10b and converts the input signal Rin(t) into a signal on the frequency axis by fast Fourier transform. The input signal Rin(t) converted into a signal on the frequency axis is represented as RIN(i, f). The FFT 301b outputs the RIN(i, f) to the adder 310, the subtracter 320, and the noise suppression unit 370. The FFTs 301a and 301b are an example of a frequency converter.

The adder 310 is a processing unit which calculates an added value p(i, f) by adding the input signal LIN(i, f) and the input signal RIN(i, f) together. The added value p(i, f) is represented by the formula (14). The adder 310 outputs the added value p(i, f) to the power calculator 330a.

$$p(i, f) = LIN(i, f) + RIN(i, f) \qquad (14)$$

The subtracter 320 calculates a subtracted value m(i, f) by subtracting the input signal RIN(i, f) from the input signal LIN(i, f). The subtracted value m(i, f) is represented by the formula (15). The subtracter 320 outputs the subtracted value m(i, f) to the power calculator 330b.

$$m(i, f) = LIN(i, f) - RIN(i, f) \qquad (15)$$

The power calculator 330a calculates a power Ppow(i, f) by summing up squared values of the added value p(i, f) of different frame numbers. The power Ppow(i, f) is represented by the formula (16). The power calculator 330a sequentially changes the value of j from 1 to n and calculates the power Ppow(i, f). The value of n is a natural number. For example, the value of n is 128. The power calculator 330a outputs the power Ppow(i, f) to the ratio calculator 340.

$$Ppow(i, f) = \Sigma p(i-j, f) \qquad (16)$$

The power calculator 330b calculates a power Mpow(i, f) by summing up squared values of the subtracted value m(i, f) of different frame numbers. The power Mpow(i, f) is represented by the formula (17). The power calculator 330b sequentially changes the value of j from 1 to n and calculates the power Mpow(i, f). The value of n is a natural number. For example, the value of n is 128. The power calculator 330b outputs the power Mpow(i, f) to the ratio calculator 340.

$$Mpow(i, f) = \Sigma m(i-j, f) \qquad (17)$$

The ratio calculator 340 calculates a ratio v(i, f) of the power Ppow(i, f) and the power Mpow(i, f). For example, the ratio calculator 340 calculates the ratio v(i, f) by the formula (18). The ratio calculator 340 outputs the ratio v(i, f) to the determination unit 350 and the gain calculator 360.

$$v(i, f) = Mpow(i, f)/Ppow(i, f) \qquad (18)$$

The determination unit 350 determines whether noise is included in the input signals LIN(i, f) and RIN(i, f) based on the ratio v(i, f). When the value of the ratio v(i, f) is greater than or equal to a predetermined threshold value, the determination unit 350 determines that noise is included in the input signals LIN(i, f) and RIN(i, f). The determination unit 350 outputs a determination result to the gain calculator 360.
The gain calculator 360 calculates a gain based on the ratio v(i, f). The gain calculator 360 first calculates g'(i, f) by the formula (19) and thereafter calculates a gain g(i, f) by the formula (20).

$$g'(i, f) = 1 - v(i, f) \qquad (19)$$

$$g(i, f) = \max(g'(i, f), \alpha) \qquad (20)$$

In the formula (20), $\alpha$ is a lower limit value greater than or equal to 0 and smaller than or equal to 1. The gain calculator 360 calculates g'(i, f) and thereafter calculates the larger value of g'(i, f) and $\alpha$ as the gain g(i, f). The gain calculator 360 outputs the gain g(i, f) to the noise suppression unit 370.
The gain calculator 360 may calculate the gain g(i, f) when noise is included in the input signals LIN(i, f) and RIN(i, f) based on the determination result of the determination unit 350. On the other hand, when noise is not included in the input signals LIN(i, f) and RIN(i, f), the gain calculator 36C may set 1 to the gain g(i, f) and output the gain g(i, f) to the noise suppression unit 370.
The noise suppression unit 370 suppresses noise by multiplying the input signals LIN(i, f) and RIN(i, f) by the gain g(i, f). For example, the noise suppression unit 370 generates output signals LOUT(i, f) and ROUT(i, f) from the input signals LIN(i, f) and RIN(i, f) and outputs the generated signals to the IFFTs 371a and 371b. For example, the output signals LOUT(i, f) and ROUT(i, f) are represented by the formulas (21) and (22).

$$LOUT(i, f) = g(i, f)LIN(i, f) \qquad (21)$$

$$ROUT(i, f) = g(i, f)RIN(i, f) \qquad (22)$$

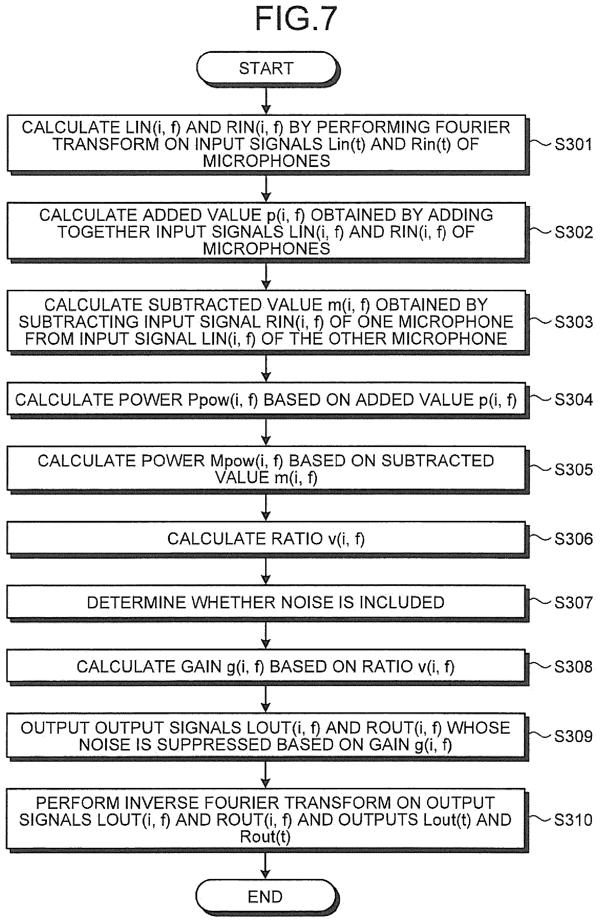

The IFFT 371a is a processing unit which generates a signal Lin(t) on the time axis by performing an inverse Fourier transform and 50% overlap addition on the LOUT(i, f). The IFFT 371a outputs the output signal Lin(t) to an external apparatus.
The IFFT 371b is a processing unit which generates a signal Rin(t) on the time axis by performing an inverse Fourier transform and 50% overlap addition on the ROUT(i, f). The IFFT 371b outputs the output signal Rin(t) to an external apparatus.
Next, a processing procedure of the signal processing apparatus 300 according to the third embodiment will be described. FIG. 7 is a flowchart illustrating the processing procedure of the signal processing apparatus according to the third embodiment. For example, the process illustrated in FIG. 7 is performed when input signals are received from the microphones 10a and 10b.

As illustrated in FIG. 7, the signal processing apparatus 300 calculates the LIN(i, f) and the RIN(i, f) by performing a Fourier transform on the input signals Lin(t) and Rin(t) of the microphones (step S301). The signal processing apparatus 300 calculates the added value p(i, f) obtained by adding together the input signals LIN(i, f) and RIN(i, f) of the microphones (step S302).

The signal processing apparatus 300 calculates the subtracted value m(i, f) obtained by subtracting the input signal RIN(i, f) of one microphone from the input signal LIN(i, f) of the other microphone (step S303). The signal processing apparatus 300 calculates the power Ppow(i, f) based on the added value p(i, f) (step S304).

The signal processing apparatus 300 calculates the power Mpow(i, f) based on the subtracted value m(i, f) (step S305). The signal processing apparatus 300 calculates the ratio v(i, f) (step S306) and determines whether noise is included (step S307).

The signal processing apparatus 300 calculates the gain g(i, f) based on the ratio v(i, f) (step S308). The signal processing apparatus 300 outputs the output signals LOUT(i, f) and ROUT(i, f) whose noise is suppressed based on the gain g(i, f) (step S309). The signal processing apparatus 300 performs an inverse Fourier transform on the output signals LOUT(i, f) and ROUT(i, f) and outputs Lout(t) and Rout(t) (step S310).

Next, effects of the signal processing apparatus 300 according to the third embodiment will be described. The signal processing apparatus 300 performs a Fourier transform on the input signals Lin(t) and Rin(t) and determines whether there is noise at each frequency. Then, the signal processing apparatus 300 calculates the gain g(i, f) at each frequency and multiplies the input signals LIN(i, f) and RIN(i, f) at each frequency by the gain g(i, f). Therefore, noise at each frequency can be suppressed.

[d] Fourth Embodiment

The processes of the aforementioned signal processing apparatuses 100 to 300 are an example. Hereinafter, another process of the signal processing apparatuses of the present invention will be described as a fourth embodiment. The process according to the fourth embodiment will be described with reference to the configuration diagram in FIG. 1.

Another process of the gain calculator 160 will be described. Although the gain calculator 160 calculates the gain g(t) by using the formula (7) and the formula (8), it is not limited to this. The gain calculator 160 may calculate the gain g(t) by using a decision table indicating a relationship between the gain g(t) and the ratio v(t) for each distance between the microphones 10a and 10b.

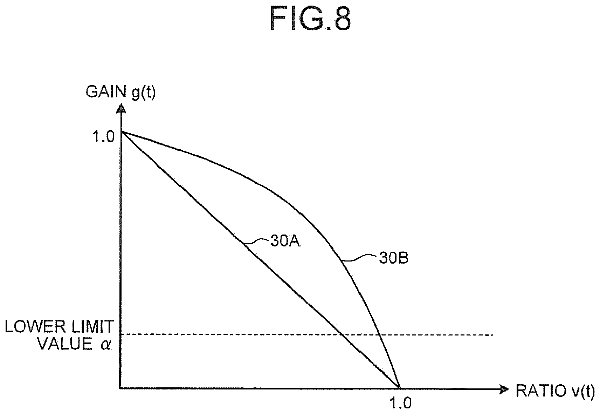

FIG. 8 is a diagram for explaining the other process of the gain calculator. For example, the gain calculator 160 defines that when the distance between the microphones 10a and 10b is 4.2 cm, the relationship between the gain g(t) and the ratio v(t) is a relationship changing as illustrated by a straight line 30A in FIG. 8. The relationship illustrated by the straight line 30A corresponds to the relationship of the formula (7).

On the other hand, the gain calculator 160 defines that when the distance between the microphones 10a and 10b is smaller than 4.2 cm, the relationship changes as illustrated by a curved line 30B in FIG. 8. In other words, the gain calculator 160 sets the change rate of the gain g(t) larger than that indicated by the straight line 30A when the value of the ratio v(t) is about 1 to 0.8. The gain calculator 160 performs the process as described above, so that it is possible to accurately suppress noise corresponding to the change of characteristics of the input signals caused by the difference of the distance between the microphones.

The gain calculator 160 may acquire information of the distance between the microphones 10a and 10b in any manner. A user may input the distance into the signal processing apparatus 100 by using an input device.

Another process of the power calculator 130a will be described. The power calculator 130a obtains the power Ppow(t) based on the formula (4). However, instead of the power Ppow(t), an average Pamp(t) of the absolute values may be calculated. For example, the power calculator 130a obtains the average of the absolute values by the formula (23) .

$$Pamp(t) = \Sigma |p(t-j)| \qquad\qquad (23)$$

Similarly, the power calculator 130b may calculate an average Mamp(t) of the absolute values instead of the power Mpow(t). For example, the power calculator 130b obtains the average of the absolute values by the formula (24).

$$Mamp(t) = \Sigma |m(t-j)| \qquad\qquad (24)$$

It is known that when the average of the absolute values is obtained, the processing load of the computer is smaller than when the power is obtained. Therefore, when it is configured so that the power calculators 130a and 130b calculate the average of the absolute values instead of the power, the cost of the signal processing apparatus 100 can be reduced.

By the way, the signal processing apparatus 100 may suppress noise by using microphones 10c and 10d not illustrated in the drawings in addition to the pair of microphones 10a and 10b. For example, the signal processing apparatus 100 calculates the ratio v(t) from the microphones 10a and 10b by the same process as that in the first embodiment. The v(t) calculated from the microphones 10a and 10b is defined as v1(t).

Also, the ratio v(t) is calculated from the microphones 10c and l0d by the same process as that in the first embodiment. The v(t) calculated from the microphones 10c and 10d is defined as v2(t). When both the v1(t) and v2(t) are greater than a predetermined threshold value, the signal processing apparatus 100 may adjust the input signals Lin(t) and Rin(t) by the gain g(t).

For example, the signal processing apparatus 100 may obtain g'(t) by the formula (25) or the formula (26). The processes after calculating the g'(t) is the same as that in the first embodiment. The g'(t) may be obtained by subtracting the average value of the v1(1) and v2(2) from 1.

$$g'(t) = 1 - v1(t) \qquad (25)$$

$$g'(t) = 1 - v2(t) \qquad (26)$$

In this way, the gain g(t) is calculated by using the microphones 10a to 10d, so that it is possible to accurately suppress noise of the input signals even when there are a plurality of users.

The processing units included in the signal processing apparatuses 100 to 300 described in the first to the fourth embodiments correspond to integrated devices such as, for example, ASIC (Application Specific Integrated Circuit) and FPGA (Field Programmable Gate Array). Also, the processing units correspond to electronic circuits such as CPU and MPU (Micro Processing Unit).

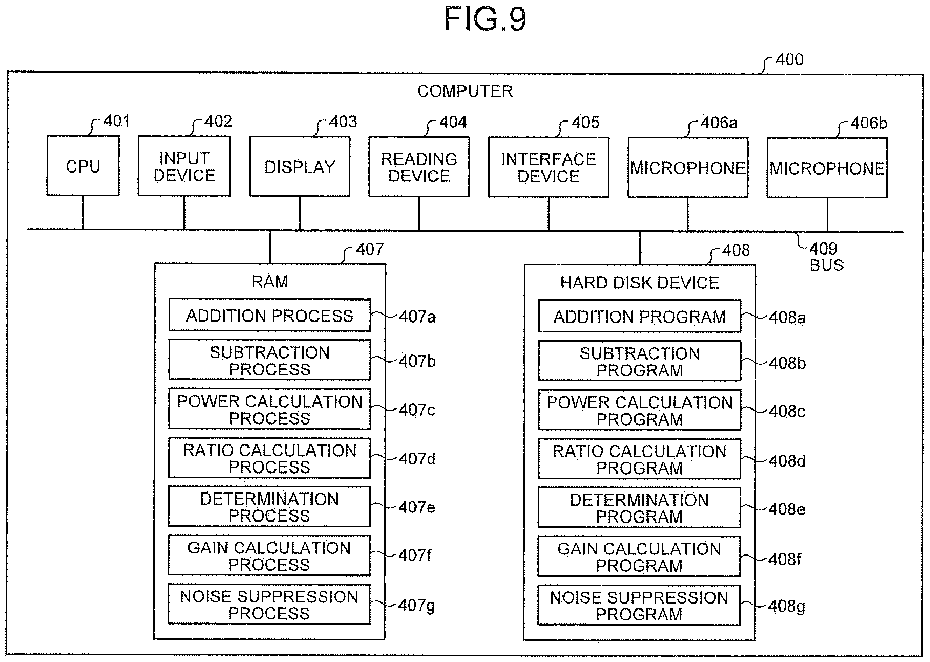

Next, an example of a computer that executes a signal processing program which realizes the same function as that of the signal processing apparatuses 100 to 300 described in the embodiments will be described. FIG. 9 is a diagram illustrating an example of the computer that executes the signal processing program.

As illustrated in FIG. 9, a computer 400 includes a CPU 401 that performs various calculation processes, an input device 402 that receives input of data from a user, and a display 403. The computer 400 also includes a reading device 404 that reads a program and the like from a storage medium and an interface device 405 that transmits and receives data to and from another computer through a network. The computer 400 also includes microphones 406a and 406b. The computer 400 also includes a RAM 407 that temporarily stores various information and a hard disk device 408. The devices 401 to 408 are connected to a bus 409.

The hard disk device 408 includes, for example, an addition program 408a, a subtraction program 408b, a power calculation program 408c, a ratio calculation program 408d, a determination program 408e, a gain calculation program 408f, and a noise suppression program 408g. The CPU 401 reads the programs 408a to 408g and develops the programs in the RAM 407.

The addition program 408a functions as an addition process 407a. The subtraction program 408b functions as a subtraction process 407b. The power calculation program 408c functions as a power calculation process 407c. The ratio calculation program 408d functions as a ratio calculation process 407d. The determination program 408e functions as a determination process 407e. The gain calculation program 408f functions as a gain calculation process 407f. The noise suppression program 408g functions as a noise suppression process 407g.

For example, the addition process 407a corresponds to the adder 110. The subtraction process 407b corresponds to the subtracter 120. The power calculation process 407c corresponds to the power calculators 130a and 130b. The ratio calculation process 407d corresponds to the ratio calculator 140. The determination process 407e corresponds to the determination unit 150. The gain calculation process 407f corresponds to the gain calculator 160. The noise suppression process 407g corresponds to the noise suppression unit 170.

The programs 408a to 408g need not necessarily be stored in the hard disk device 408 from the beginning. For example, the programs are stored in a "portable physical medium" such as a flexible disk (FD), a CD-ROM, a DVD disk, a magneto-optical disk, and an IC card which are inserted in the computer 400. The computer 400 may read the programs 408a to 408g from these media and execute the programs. The programs of the signal processing apparatuses 200 and 300 described in the second to the fourth embodiments are executed by the computer 400 in the same manner as the programs of the signal processing apparatus 100.

According to the disclosed signal processing apparatus, there is an effect that noise included in the input signal can be suppressed.

EP 2 608 201 B1

**Claims**

1. A signal processing apparatus (100, 200, 300) comprising:

an adder (110, 210, 310) arranged to acquire a plurality of input signals from a plurality of microphones (10a, 10b) and calculate an added value obtained by adding the input signals together;
a subtracter (120, 220, 320) arranged to acquire a plurality of input signals from the plurality of microphones (10a, 10b) and calculate a subtracted value obtained by subtracting one input signal from the other input signal;
a first power calculator (130a; 230a; 330a) arranged to calculate a first power by summing up squared values of the added value;
a second power calculator (130b; 230b; 330b) arranged to calculate a second power by summing up squared values of the subtracted value;
a determination unit (150, 250, 350) arranged to determine that noise is included in the input signals when a difference between the first power and the second power is smaller than a threshold value;
a gain calculator (160, 260, 360) arranged to calculate a gain based on the added value and the subtracted value, wherein, when the determination unit (150, 250, 350) determines that noise is included in the input signals, the gain calculator (160, 260, 360) is arranged to:

calculate the gain by calculating a ratio as the second power divided by the first power, and subtracting the calculated ratio from 1;
when the calculated gain is greater than or equal to a predetermined gain, output the calculated gain; and
when the calculated gain is smaller than the predetermined gain, output the predetermined gain; and

a noise suppression unit (170, 270, 370) arranged to
suppress noise of the input signals by multiplying the input signals by the gain output by the gain calculator (160, 260, 360).

2. A signal processing apparatus (100, 200, 300) comprising:

an adder (110, 210, 310) arranged to acquire a plurality of input signals from a plurality of microphones (10a, 10b) and calculate an added value obtained by adding the input signals together;
a subtracter (120, 220, 320) arranged to acquire a plurality of input signals from the plurality of microphones (10a, 10b) and calculate a subtracted value obtained by subtracting one input signal from the other input signal;
a first power calculator (130a; 230a; 330a) arranged to calculate a first power by summing up squared values of the added value;
a second power calculator (130b; 230b; 330b) arranged to calculate a second power by summing up squared values of the subtracted value;
a determination unit (150, 250, 350) arranged to determine that noise is included in the input signals when a ratio obtained by dividing the second power by the first power is greater than or equal to a threshold value;
a gain calculator (160, 260, 360) arranged to calculate a gain based on the added value and the subtracted value, wherein, when the determination unit (150, 250, 350) determines that noise is included in the input signals, the gain calculator (160, 260, 360) is arranged to:

calculate the gain by calculating a ratio as the second power divided by the first power, and subtracting the calculated ratio from 1;
when the calculated gain is greater than or equal to a predetermined gain, output the calculated gain; and
when the calculated gain is smaller than the predetermined gain, output the predetermined gain; and

a noise suppression unit (170, 270, 370) arranged to
suppress noise of the input signals by multiplying the input signals by the gain output by the gain calculator (160, 260, 360).

3. The signal processing apparatus (200) according to claim 1 or claim 2, further comprising:

a delay detector (201) arranged to acquire input signals from the plurality of microphones (10a, 10b), change a delay amount of each of the input signals, and detect delay amounts by which a correlation coefficient of the input signals is a maximum; and
a delay unit (202a, 202b) arranged to delay each of the input signals based on the delay amounts detected by the delay detector (201),
wherein the adder (210) is arranged to calculate the added value based on the input signals delayed by the delay unit (202a, 202b), and
the subtracter (220) is arranged to calculate the subtracted value based on the input signals delayed by the delay unit (202a, 202b).

4. The signal processing apparatus (100, 200, 300) according to claim 3, wherein

the delay detector (201) is arranged to acquire a first input signal and a second input signal, change a delay amount of the first input signal, and detect a delay amount by which a correlation coefficient of the first input signal and the second input signal is a maximum,
the delay unit (202a, 202b) is arranged to delay the first input signal by the delay amount in a first case, when the delay amount is greater than or equal to 0, and delay the second input signal by an absolute value of the delay amount in a second case, when the delay amount is smaller than 0,
the adder (210) is arranged to calculate the added value based on the delayed first input signal and the second input signal in the first case, and based on the first input signal and the delayed second input signal in the second case, and
the subtracter (220) is arranged to calculate the subtracted value based on the delayed first input signal and the second input signal in the first case, and based on the first input signal and the delayed second input signal in the second case.

5. The signal processing apparatus (300) according to claim 1 or claim 2, further comprising

a frequency converter (301a, 301b) arranged to acquire input signals from the plurality of microphones (10a, 10b) and convert each of the input signals into a signal on a frequency axis,
wherein the adder (310) is arranged to calculate the added value based on each signal on the frequency axis, and
the subtracter (320) is arranged to calculate the subtracted value based on each signal on the frequency axis.

6. The signal processing apparatus (100, 200, 300) according to claim 1 or claim 2, wherein the gain calculator (160, 260, 360) is arranged to calculate the gain based on a formula $g(t)= 1-v(t)$, $g(t)$ indicating the gain, $v(t)$ indicating the ratio when a distance between the microphones (10a, 10b) is 4.2 cm, and calculate the gain using a decision table wherein the gain varies with the ratio such that the gain is 1 when the ratio is zero, the gain is zero when the ratio is 1, and the gain is greater than $g(t)$ for all values of the ratio between zero and 1, when the distance between the microphones (10a, 10b) is smaller than 4.2 cm.

7. The signal processing apparatus (100, 200, 300) according to claim 6, wherein the gain varies with the ratio in the decision table such that the rate of change of the gain with the ratio is smaller than -1 for values of the ratio between 0.8 and 1.

8. The signal processing apparatus (100, 200, 300) according to claim 1 or claim 2, wherein the ratio calculator (140, 240, 340) is arranged to calculate a ratio of a value obtained by squaring the subtracted value to a value obtained by squaring the added value.

9. The signal processing apparatus (100, 200, 300) according to claim 1 or claim 2, wherein the ratio calculator (140, 240, 340) is arranged to calculate a ratio of an absolute value of the subtracted value to an absolute value of the added value.

10. The signal processing apparatus (100, 200, 300) according to claim 1 or claim 2, wherein

the adder (110, 210, 310) is arranged to calculate a first added value obtained by adding together input signals acquired from a first microphone and a second microphone and a second added value obtained by adding together input signals acquired from a third microphone and a fourth microphone,
the subtracter (120, 220, 320) is arranged to calculate a first subtracted value obtained by subtracting an input signal acquired from the second microphone from an input signal acquired from the first microphone and a second subtracted value obtained by subtracting an input signal acquired from the fourth microphone from an input signal acquired from the third microphone, and
the gain calculator (160, 260, 360) is arranged to calculate a gain based on the first added value, the second added value, the first subtracted value, and the second subtracted value.

**11.** A signal processing method comprising:

acquiring a plurality of input signals from a plurality of microphones and calculating an added value obtained by adding the input signals together;

acquiring a plurality of input signals from the plurality of microphones and calculating a subtracted value obtained by subtracting one input signal from the other input signal;

calculating a first power by summing up squared values of the added value;

calculating a second power by summing up squared values of the subtracted value;

determining noise is included in the input signals when a difference between the first power and the second power is smaller than a threshold value;

calculating a gain based on the added value and the subtracted value,

wherein, when the determining determines that noise is included in the input signals, the calculating of the gain comprises:

calculating the gain by calculating a ratio as the second power divided by the first power, and subtracting the calculated ratio from 1;

when the calculated gain is greater than or equal to a predetermined gain,

outputting the calculated gain; and

when the calculated gain is smaller than the predetermined gain, outputting the predetermined gain; and

suppressing noise of the input signals by multiplying the input signals by the outputted gain.

**12.** A signal processing method comprising:

acquiring a plurality of input signals from a plurality of microphones and calculating an added value obtained by adding the input signals together;

acquiring a plurality of input signals from the plurality of microphones and calculating a subtracted value obtained by subtracting one input signal from the other input signal;

calculating a first power by summing up squared values of the added value;

calculating a second power by summing up squared values of the subtracted value;

determining noise is included in the input signals when a ratio obtained by dividing the second power by the first power is greater than or equal to a threshold value;

calculating a gain based on the added value and the subtracted value, wherein, when the determining determines that noise is included in the input signals, the calculating of the gain comprises:

calculating the gain by calculating a ratio as the second power divided by the first power, and subtracting the calculated ratio from 1;

when the calculated gain is greater than or equal to a predetermined gain,

outputting the calculated gain; and

when the calculated gain is smaller than the predetermined gain, outputting

the predetermined gain; and

suppressing noise of the input signals by multiplying the input signals by the outputted gain.

**13.** A signal processing program comprising instructions which, when executed by a computer, causes the computer to execute a signal processing method according to claim 11 or claim 12.

**Patentansprüche**

**1.** Signalverarbeitungseinrichtung (100, 200, 300), umfassend:

ein Addierwerk (110, 210, 310), das angeordnet ist, um eine Vielzahl von Eingangssignalen von einer Vielzahl von Mikrofonen (10a, 10b) zu erlangen und einen addierten Wert, der durch Zusammenaddieren der Eingangssignale erhalten wird, zu berechnen;

ein Subtraktionswerk (120, 220, 320), das angeordnet ist, um eine Vielzahl von Eingangssignalen von der Vielzahl von Mikrofonen (10a, 10b) zu erlangen und einen subtrahierten Wert, der durch Subtrahieren eines Eingangssignals von dem anderen Eingangssignal erhalten wird, zu berechnen;

einen ersten Leistungsrechner (130a; 230a; 330a), der angeordnet ist, um eine erste Leistung durch Summieren von Quadraturwerten des addierten Werts zu berechnen;

einen zweiten Leistungsrechner (130b; 230b; 330b), der angeordnet ist, um eine zweite Leistung durch Summieren von Quadraturwerten des subtrahierten Werts zu berechnen;

eine Feststellungseinheit (150, 250, 350), die angeordnet ist, um festzustellen, dass ein Rauschen in den Eingangssignalen vorhanden ist, wenn ein Unterschied zwischen der ersten Leistung und der zweiten Leistung geringer ist als ein Grenzwert;

ein Signalverstärkungsrechner (160, 260, 360), der angeordnet ist, um eine Signalverstärkung basierend auf dem addierten Wert und dem subtrahierten Wert zu berechnen,

wobei, wenn die Feststellungseinheit (150, 250, 350) feststellt, dass ein Rauschen in den Eingangssignalen vorhanden ist, der Signalverstärkungsrechner (160, 260, 360) angeordnet ist, um:

die Signalverstärkung durch Berechnen eines Verhältnisses als die zweite Leistung, geteilt durch die erste Leistung, und Subtrahieren des berechneten Verhältnisses von 1 zu berechnen;

wenn die berechnete Signalverstärkung größer als eine oder gleichwertig einer vorbestimmten Signalverstärkung ist, die berechnete Signalverstärkung auszugeben; und

wenn die berechnete Signalverstärkung geringer als die vorbestimmte Signalverstärkung ist, die vorbestimmte Signalverstärkung auszugeben; und

eine Rauschunterdrückungseinheit (170, 270, 370), die angeordnet ist, um

ein Rauschen der Eingangssignale durch Multiplizieren der Eingangssignale durch die Signalverstärkungsausgabe von dem Signalverstärkungsrechner (160, 260, 360) zu unterdrücken.

2. Signalverarbeitungseinrichtung (100, 200, 300), umfassend:

ein Addierwerk (110, 210, 310), das angeordnet ist, um eine Vielzahl von Eingangssignalen von einer Vielzahl von Mikrofonen (10a, 10b) zu erlangen und einen addierten Wert, der durch Zusammenaddieren der Eingangssignale erhalten wird, zu berechnen;

ein Subtraktionswerk (120, 220, 320), das angeordnet ist, um eine Vielzahl von Eingangssignalen von der Vielzahl von Mikrofonen (10a, 10b) zu erlangen und einen subtrahierten Wert, der durch Subtrahieren eines Eingangssignals von dem anderen Eingangssignal erhalten wird, zu berechnen;

einen ersten Leistungsrechner (130a; 230a; 330a), der angeordnet ist, um eine erste Leistung durch Summieren von Quadraturwerten des addierten Werts zu berechnen;

einen zweiten Leistungsrechner (130b; 230b; 330b), der angeordnet ist, um eine zweite Leistung durch Summieren von Quadraturwerten des subtrahierten Werts zu berechnen;

eine Feststellungseinheit (150, 250, 350), die angeordnet ist, um festzustellen, dass ein Rauschen in den Eingangssignalen vorhanden ist, wenn ein durch Teilen der zweiten Leistung durch die erste Leistung erhaltenes Verhältnis größer als ein oder gleichwertig einem Grenzwert ist;

ein Signalverstärkungsrechner (160, 260, 360), der angeordnet ist, um eine Signalverstärkung basierend auf dem addierten Wert und dem subtrahierten Wert zu berechnen,

wobei, wenn die Feststellungseinheit (150, 250, 350) feststellt, dass ein Rauschen in den Eingangssignalen vorhanden ist, der Signalverstärkungsrechner (160, 260, 360) angeordnet ist, um:

die Signalverstärkung durch Berechnen eines Verhältnisses als die zweite Leistung, geteilt durch die erste Leistung, und Subtrahieren des berechneten Verhältnisses von 1 zu berechnen;

wenn die berechnete Signalverstärkung größer als eine oder gleichwertig einer vorbestimmten Signalverstärkung ist, die berechnete Signalverstärkung auszugeben; und

wenn die berechnete Signalverstärkung geringer als die vorbestimmte Signalverstärkung ist, die vorbestimmte Signalverstärkung auszugeben; und

eine Rauschunterdrückungseinheit (170, 270, 370), die angeordnet ist, um

ein Rauschen der Eingangssignale durch Multiplizieren der Eingangssignale durch die Signalverstärkungsausgabe von dem Signalverstärkungsrechner (160, 260, 360) zu unterdrücken.

3. Signalverarbeitungseinrichtung (200) nach Anspruch 1 oder Anspruch 2, weiter umfassend:

einen Verzögerungsdetektor (201), der angeordnet ist, um Eingangssignale von der Vielzahl von Mikrofonen (10a, 10b) zu erlangen, eine Verzögerungsmenge von jedem der Eingangssignale zu verändern und Verzögerungsmengen zu detektieren, durch welche ein Korrelationskoeffizient der Eingangssignale ein Maximum darstellt; und

eine Verzögerungseinheit (202a, 202b), die angeordnet ist, jedes der Eingangssignale basierend auf den von dem Verzögerungsdetektor (201) detektierten Verzögerungsmengen zu verzögern,

wobei das Addierwerk (210) angeordnet ist, um den addierten Wert basierend auf den Eingangssignalen, die von der Verzögerungseinheit (202a, 202b) verzögert wurden, zu berechnen, und

wobei das Subtraktionswerk (220) angeordnet ist, um den subtrahierten Wert basierend auf den Eingangssignalen, die von der Verzögerungseinheit (202a, 202b) verzögert wurden, zu berechnen.

4. Signalverarbeitungseinrichtung (100, 200, 300) nach Anspruch 3, wobei

der Verzögerungsdetektor (201) angeordnet ist, um ein erstes Eingangssignal und ein zweites Eingangssignal zu erlangen, eine Verzögerungsmenge des ersten Eingangssignals zu verändern und eine Verzögerungsmenge zu detektieren, durch welche ein Korrelationskoeffizient des ersten Eingangssignals und des zweiten Eingangssignals ein Maximum ist,

die Verzögerungseinheit (202a, 202b) angeordnet ist, das erste Eingangssignal um die Verzögerungsmenge in einem ersten Fall zu verzögern, in dem die Verzögerungsmenge größer als oder gleichwertig 0 ist, und das zweite Eingangssignal um einen Absolutwert der Verzögerungsmenge in einem zweiten Fall zu verzögern, in dem die Verzögerungsmenge kleiner als 0 ist,

wobei das Addierwerk (210) angeordnet ist, um den addierten Wert basierend auf dem verzögerten ersten Eingangssignal und dem zweiten Eingangssignal in dem ersten Fall und basierend auf dem ersten Eingangssignal und dem verzögerten zweiten Eingangssignal in dem zweiten Fall zu berechnen, und

wobei das Subtraktionswerk (220) angeordnet ist, um den subtrahierten Wert basierend auf dem verzögerten ersten Eingangssignal und dem zweiten Eingangssignal in dem ersten Fall und basierend auf dem ersten Eingangssignal und dem verzögerten zweiten Eingangssignal in dem zweiten Fall zu berechnen.

5. Signalverarbeitungseinrichtung (300) nach Anspruch 1 oder Anspruch 2, weiter umfassend

einen Frequenzumrichter (301a, 301b), der angeordnet ist, um Eingangssignale von der Vielzahl von Mikrofonen (10a, 10b) zu erlangen und jedes der Eingangssignale in ein Signal an einer Frequenzachse umzurichten,

wobei das Addierwerk (310) angeordnet ist, um den addierten Wert basierend auf jedem Signal an der Frequenzachse zu berechnen, und

wobei das Subtraktionswerk (320) angeordnet ist, um den subtrahierten Wert basierend auf jedem Signal an der Frequenzachse zu berechnen.

6. Signalverarbeitungseinrichtung (100, 200, 300) nach Anspruch 1 oder Anspruch 2, wobei der Signalverstärkungsrechner (160, 260, 360) angeordnet ist, um die Signalverstärkung basierend auf einer Formel $g(t)= l-v(t)$, $g(t)$, die auf die Signalverstärkung hinweist, zu berechnen, wobei $v(t)$ auf das Verhältnis hinweist, wenn eine Distanz zwischen den Mikrofonen (10a, 10b) 4,2 cm beträgt, und die Signalverstärkung unter Verwendung einer Entscheidungstabelle zu berechnen, wobei die Signalverstärkung mit dem Verhältnis variiert, sodass die Signalverstärkung 1 ist, wenn das Verhältnis Null ist, wobei die Signalverstärkung Null ist, wenn das Verhältnis 1 ist und die Signalverstärkung größer als $g(t)$ für alle Werte des Verhältnisses zwischen Null und 1 ist, wenn die Distanz zwischen den Mikrofonen (10a, 10b) kleiner ist als 4,2 cm.

7. Signalverarbeitungseinrichtung (100, 200, 300) nach Anspruch 6, wobei die Signalverstärkung mit dem Verhältnis in der Entscheidungstabelle variiert, sodass die Veränderungsrate der Signalverstärkung mit dem Verhältnis kleiner ist als -1 für Werte des Verhältnisses zwischen 0,8 und 1.

8. Signalverarbeitungseinrichtung (100, 200, 300) nach Anspruch 1 oder Anspruch 2, wobei der Verhältnisrechner (140, 240, 340) angeordnet ist, um ein Verhältnis eines durch Quadratur des subtrahierten Werts erhaltenen Werts zu einem durch Quadratur des addiertes Werts erhaltenen Werts zu berechnen.

9. Signalverarbeitungseinrichtung (100, 200, 300) nach Anspruch 1 oder Anspruch 2, wobei der Verhältnisrechner (140, 240, 340) angeordnet ist, um ein Verhältnis eines Absolutwerts des subtrahierten Werts zu einem Absolutwert des addierten Werts zu berechnen.

10. Signalverarbeitungseinrichtung (100, 200, 300) nach Anspruch 1 oder Anspruch 2, wobei

das Addierwerk (110, 210, 310) angeordnet ist, um einen ersten addierten Wert zu berechnen, der durch Zusammenaddieren von Eingangssignalen erhalten wird, die von einem ersten Mikrofon und einem zweiten Mikrofon erlangt werden, und einen zweiten addierten Wert, der durch Zusammenaddieren von Eingangssignalen erhalten wird, die von einem dritten Mikrofon und einem vierten Mikrofon erlangt werden,

das Subtraktionswerk (120, 220, 320) angeordnet ist, um einen ersten subtrahierten Wert zu berechnen, der durch Subtrahieren eines Eingangssignals erhalten wird, das von dem zweiten Mikrofon von einem Eingangssignal erlangt wird, das von dem ersten Mikrofon erlangt wird, und einen zweiten subtrahierten Wert, der durch Subtrahieren eines Eingangssignals erhalten wird, das von dem vierten Mikrofon von einem Eingangssignal erlangt wird, das von dem dritten Mikrofon erlangt wird, und

der Signalverstärkungsrechner (160, 260, 360) angeordnet ist, um eine Signalverstärkung basierend auf dem ersten addierten Wert, dem zweiten addierten Wert, dem ersten subtrahierten Wert und dem zweiten subtrahierten Wert zu berechnen.

**11.** Signalverarbeitungsverfahren, umfassend:

Erlangen einer Vielzahl von Eingangssignalen von einer Vielzahl von Mikrofonen und Berechnen eines addierten Werts, der durch Zusammenaddieren der Eingangssignale erhalten wird;
Erlangen einer Vielzahl von Eingangssignalen von der Vielzahl von Mikrofonen und Berechnen eines subtrahierten Werts, der durch Subtrahieren eines Eingangssignals von dem anderen Eingangssignal erhalten wird;
Berechnen einer ersten Leistung durch Summieren von Quadraturwerten des addierten Werts;
Berechnen einer zweiten Leistung durch Summieren von Quadraturwerten des subtrahierten Werts;
Feststellen, dass ein Rauschen in den Eingangssignalen vorhanden ist, wenn eine Differenz zwischen der ersten Leistung und der zweiten Leistung kleiner ist als ein Grenzwert;
Berechnen einer Signalverstärkung basierend auf dem addierten Wert und dem subtrahierten Wert,
wobei, wenn das Feststellen feststellt, dass ein Rauschen in den Eingangssignalen vorhanden ist, das Berechnen der Signalverstärkung Folgendes umfasst:

Berechnen der Signalverstärkung durch Berechnen eines Verhältnisses bezüglich der zweiten Leistung, geteilt durch die erste Leistung, und Subtrahieren des berechneten Verhältnisses von 1;
wenn die berechnete Signalverstärkung größer ist als eine oder gleichwertig einer vorbestimmten Signalverstärkung ist, das Ausgeben der berechneten Signalverstärkung; und
wenn die berechnete Signalverstärkung kleiner ist als die vorbestimmte Signalverstärkung, das Ausgeben der vorbestimmten Signalverstärkung; und

Rauschunterdrückung der Eingangssignale durch Multiplizieren der Eingangssignale durch die ausgegebene Signalverstärkung.

**12.** Signalverarbeitungsverfahren, umfassend:

Erlangen einer Vielzahl von Eingangssignalen von einer Vielzahl von Mikrofonen und Berechnen eines addierten Werts, der durch Zusammenaddieren der Eingangssignale erhalten wird;
Erlangen einer Vielzahl von Eingangssignalen von der Vielzahl von Mikrofonen und Berechnen eines subtrahierten Werts, der durch Subtrahieren eines Eingangssignals von dem anderen Eingangssignal erhalten wird;
Berechnen einer ersten Leistung durch Summieren von Quadraturwerten des addierten Werts;
Berechnen einer zweiten Leistung durch Summieren von Quadraturwerten des subtrahierten Werts;
Feststellen, dass ein Rauschen in den Eingangssignalen vorhanden ist, wenn ein Verhältnis, das durch Teilen der zweiten Leistung durch die erste Leistung größer ist als ein oder gleich einem Grenzwert ist;
Berechnen einer Signalverstärkung basierend auf dem addierten Wert und dem subtrahierten Wert,
wobei, wenn das Feststellen feststellt, dass ein Rauschen in den Eingangssignalen vorhanden ist, das Berechnen der Signalverstärkung Folgendes umfasst:

Berechnen der Signalverstärkung durch Berechnen eines Verhältnisses bezüglich der zweiten Leistung, geteilt durch die erste Leistung, und Subtrahieren des berechneten Verhältnisses von 1;
wenn die berechnete Signalverstärkung größer ist als eine oder gleichwertig einer vorbestimmten Signalverstärkung ist, das Ausgeben der berechneten Signalverstärkung; und
wenn die berechnete Signalverstärkung kleiner ist als die vorbestimmte Signalverstärkung, das Ausgeben der vorbestimmten Signalverstärkung; und

Rauschunterdrückung der Eingangssignale durch Multiplizieren der Eingangssignale durch die ausgegebene Signalverstärkung.

13. Signalverarbeitungsprogramm, umfassend Anweisungen, die bei Ausführen durch einen Computer den Computer dazu veranlassen, ein Signalverarbeitungsverfahren nach Anspruch 11 oder Anspruch 12 auszuführen.

**Revendications**

1. Appareil de traitement de signal (100, 200, 300) comprenant :

un additionneur (110, 210, 310) agencé pour acquérir une pluralité de signaux d'entrée à partir d'une pluralité de microphones (10a, 10b) et calculer une valeur additionnée obtenue par addition des signaux d'entrée ;
un soustracteur (120, 220, 320) agencé pour acquérir une pluralité de signaux d'entrée à partir de la pluralité de microphones (10a, 10b) et calculer une valeur soustraite obtenue par soustraction d'un signal d'entrée des autres signaux d'entrée ;
un premier calculateur de puissance (130a ; 230a ; 330a) agencé pour calculer une première puissance par cumul des valeurs au carré de la valeur additionnée ;
un second calculateur de puissance (130b ; 230b ; 330b) agencé pour calculer une seconde puissance par cumul des valeurs au carré de la valeur soustraite ;
une unité de détermination (150, 250, 350) agencée pour déterminer qu'un bruit est inclus dans les signaux d'entrée lorsqu'une différence entre la première puissance et la seconde puissance est inférieure à une valeur seuil ;
un calculateur de gain (160, 260, 360) agencé pour calculer un gain sur la base de la valeur additionnée et de la valeur soustraite,
dans lequel, lorsque l'unité de détermination (150, 250, 350) détermine qu'un bruit est inclus dans les signaux d'entrée, le calculateur de gain (160, 260, 360) est agencé pour :

calculer le gain par calcul d'un rapport tel que la seconde puissance divisée par la première puissance, et soustraction du rapport calculé de 1 ;
lorsque le gain calculé est supérieur ou égal à un gain prédéterminé, délivrer en sortie le gain calculé ; et
lorsque le gain calculé est inférieur au gain prédéterminé, délivrer en sortie le gain prédéterminé ; et

une unité d'élimination de bruit (170, 270, 370) agencée pour
éliminer un bruit des signaux d'entrée par multiplication des signaux d'entrée par le gain délivré en sortie par le calculateur de gain (160, 260, 360).

2. Appareil de traitement de signal (100, 200, 300) comprenant :

un additionneur (110, 210, 310) agencé pour acquérir une pluralité de signaux d'entrée à partir d'une pluralité de microphones (10a, 10b) et calculer une valeur additionnée obtenue par addition des signaux d'entrée ;
un soustracteur (120, 220, 320) agencé pour acquérir une pluralité de signaux d'entrée à partir de la pluralité de microphones (10a, 10b) et calculer une valeur soustraite obtenue par soustraction d'un signal d'entrée des autres signaux d'entrée ;
un premier calculateur de puissance (130a ; 230a ; 330a) agencé pour calculer une première puissance par cumul des valeurs au carré de la valeur additionnée ;
un second calculateur de puissance (130b ; 230b ; 330b) agencé pour calculer une seconde puissance par cumul des valeurs au carré de la valeur soustraite ;
une unité de détermination (150, 250, 350) agencée pour déterminer qu'un bruit est inclus dans les signaux d'entrée lorsqu'un rapport obtenu par division de la seconde puissance par la première puissance est supérieur ou égal à une valeur seuil ;
un calculateur de gain (160, 260, 360) agencé pour calculer un gain sur la base de la valeur additionnée et de la valeur soustraite,
dans lequel, lorsque l'unité de détermination (150, 250, 350) détermine qu'un bruit est inclus dans les signaux d'entrée, le calculateur de gain (160, 260, 360) est agencé pour :

calculer le gain par calcul d'un rapport tel que la seconde puissance divisée par la première puissance, et soustraction du rapport calculé de 1 ;

lorsque le gain calculé est supérieur ou égal à un gain prédéterminé, délivrer en sortie le gain calculé ; et
lorsque le gain calculé est inférieur au gain prédéterminé, délivrer en sortie le gain prédéterminé ; et

une unité d'élimination de bruit (170, 270, 370) agencée pour
éliminer un bruit des signaux d'entrée par multiplication des signaux d'entrée par le gain délivré en sortie par le calculateur de gain (160, 260, 360).

**3.** Appareil de traitement de signal (200) selon la revendication 1 ou la revendication 2, comprenant en outre :

un détecteur de retard (201) agencé pour acquérir des signaux d'entrée à partir de la pluralité de microphones (10a, 10b), modifier une quantité de retard pour chacun des signaux d'entrée, et détecter des quantités de retard selon lesquelles un coefficient de corrélation des signaux d'entrée est un maximum ; et
une unité de retard (202a, 202b) agencée pour retarder chacun des signaux d'entrée sur la base des quantités de retard détectées par le détecteur de retard (201),
dans lequel l'additionneur (210) est agencé pour calculer la valeur additionnée sur la base des signaux d'entrée retardés par l'unité de retard (202a, 202b), et
le soustracteur (220) est agencé pour calculer la valeur soustraite sur la base des signaux d'entrée retardés par l'unité de retard (202a, 202b).

**4.** Appareil de traitement de signal (100, 200, 300) selon la revendication 3, dans lequel

le détecteur de retard (201) est agencé pour acquérir un premier signal d'entrée et un second signal d'entrée, modifier une quantité de retard du premier signal d'entrée, et détecter une quantité de retard selon laquelle un coefficient de corrélation du premier signal d'entrée et du second signal d'entrée est un maximum,
l'unité de retard (202a, 202b) est agencée pour retarder le premier signal d'entrée de la quantité de retard dans un premier cas, lorsque la quantité de retard est supérieure ou égale à 0, et retarder le second signal d'entrée d'une valeur absolue de la quantité de retard dans un second cas, lorsque la quantité de retard est inférieure à 0,
l'additionneur (210) est agencé pour calculer la valeur additionnée sur la base du premier signal d'entrée retardé et du second signal d'entrée dans le premier cas, et sur la base du premier signal d'entrée et du second signal d'entrée retardé dans le second cas, et
le soustracteur (220) est agencé pour calculer la valeur soustraite sur la base du premier signal d'entrée retardé et du second signal d'entrée dans le premier cas, et sur la base du premier signal d'entrée et du second signal d'entrée retardé dans le second cas.

**5.** Appareil de traitement de signal (300) selon la revendication 1 ou la revendication 2, comprenant en outre

un convertisseur de fréquence (301a, 301b) agencé pour acquérir des signaux d'entrée à partir de la pluralité de microphones (10a, 10b) et convertir chacun des signaux d'entrée en un signal sur un axe de fréquence,
dans lequel l'additionneur (310) est agencé pour calculer la valeur additionnée sur la base de chaque signal sur l'axe de fréquence, et
le soustracteur (320) est agencé pour calculer la valeur soustraite sur la base de chaque signal sur l'axe de fréquence.

**6.** Appareil de traitement de signal (100, 200, 300) selon la revendication 1 ou la revendication 2, dans lequel le calculateur de gain (160, 260, 360) est agencé pour calculer le gain sur la base d'une formule $g(t) = 1 - v(t)$, $g(t)$ représentant le gain, $v(t)$ représentant le rapport lorsqu'une distance entre les microphones (10a, 10b) est 4,2 cm, et calculer le gain en utilisant une table de décision dans lequel le gain varie en fonction du rapport de sorte que le gain est de 1 lorsque le rapport vaut zéro, le gain vaut zéro lorsque le rapport est de 1, et le gain est supérieur à $g(t)$ pour toutes les valeurs du rapport entre zéro et 1, lorsque la distance entre les microphones (10a, 10b) est inférieure à 4,2 cm.

**7.** Appareil de traitement de signal (100, 200, 300) selon la revendication 6, dans lequel le gain varie en fonction du rapport dans la table de décision de sorte que le taux de changement du gain en fonction du rapport est inférieur à -1 pour des valeurs du rapport entre 0,8 et 1.

**8.** Appareil de traitement de signal (100, 200, 300) selon la revendication 1 ou la revendication 2, dans lequel le calculateur de rapport (140, 240, 340) est agencé pour calculer un rapport entre une valeur obtenue par élévation au carré de la valeur soustraite et une valeur obtenue par élévation au carré de la valeur additionnée.

**9.** Appareil de traitement de signal (100, 200, 300) selon la revendication 1 ou la revendication 2, dans lequel le calculateur de rapport (140, 240, 340) est agencé pour calculer un rapport entre une valeur absolue de la valeur soustraite et une valeur absolue de la valeur additionnée.

**10.** Appareil de traitement de signal (100, 200, 300) selon la revendication 1 ou la revendication 2, dans lequel

l'additionneur (110, 210, 310) est agencé pour calculer une première valeur additionnée obtenue par addition des signaux d'entrée acquis à partir d'un premier microphone et d'un deuxième microphone et une seconde valeur additionnée obtenue par addition des signaux d'entrée acquis à partir d'un troisième microphone et d'un quatrième microphone,
le soustracteur (120, 220, 320) est agencé pour calculer une première valeur soustraite obtenue par soustraction d'un signal d'entrée acquis à partir du deuxième microphone d'un signal d'entrée acquis à partir du premier microphone et une seconde valeur soustraite obtenue par soustraction d'un signal d'entrée acquis à partir du quatrième microphone d'un signal d'entrée acquis à partir du troisième microphone, et
le calculateur de gain (160, 260, 360) est agencé pour calculer un gain sur la base de la première valeur additionnée, de la seconde valeur additionnée, de la première valeur soustraite, et de la seconde valeur soustraite.

**11.** Procédé de traitement de signal comprenant :

l'acquisition d'une pluralité de signaux d'entrée à partir d'une pluralité de microphones et le calcul d'une valeur additionnée obtenue par addition des signaux d'entrée ;
l'acquisition d'une pluralité de signaux d'entrée à partir de la pluralité de microphones et le calcul d'une valeur soustraite obtenue par soustraction d'un signal d'entrée des autres signaux d'entrée ;
le calcul d'une première puissance par cumul de valeurs au carré de la valeur additionnée ;
le calcul d'une seconde puissance par cumul de valeurs au carré de la valeur soustraite ;
la détermination qu'un bruit est inclus dans les signaux d'entrée lorsqu'une différence entre la première puissance et la seconde puissance est inférieure à une valeur seuil ;
le calcul d'un gain sur la base de la valeur additionnée et de la valeur soustraite,
dans lequel, lorsque la détermination détermine qu'un bruit est inclus dans les signaux d'entrée, le calcul du gain comprend :

le calcul du gain par calcul d'un rapport tel que la seconde puissance divisée par la première puissance, et soustraction du rapport calculé de 1 ;
lorsque le gain calculé est supérieur ou égal à un gain prédéterminé, la sortie du gain calculé ; et
lorsque le gain calculé est inférieur au gain prédéterminé, la sortie du gain prédéterminé ; et

l'élimination du bruit des signaux d'entrée par multiplication des signaux d'entrée par le gain délivré en sortie.

**12.** Procédé de traitement de signal comprenant :

l'acquisition d'une pluralité de signaux d'entrée à partir d'une pluralité de microphones et le calcul d'une valeur additionnée obtenue par addition des signaux d'entrée ;
l'acquisition d'une pluralité de signaux d'entrée à partir de la pluralité de microphones et le calcul d'une valeur soustraite obtenue par soustraction d'un signal d'entrée des autres signaux d'entrée ;
le calcul d'une première puissance par cumul de valeurs au carré de la valeur additionnée ;
le calcul d'une seconde puissance par cumul de valeurs au carré de la valeur soustraite ;
la détermination qu'un bruit est inclus dans les signaux d'entrée lorsqu'un rapport obtenu par division de la seconde puissance par la première puissance est supérieur ou égal à une valeur seuil ;
le calcul d'un gain sur la base de la valeur additionnée et de la valeur soustraite,
dans lequel, lorsque la détermination détermine qu'un bruit est inclus dans les signaux d'entrée, le calcul du gain comprend :

le calcul du gain par calcul d'un rapport tel que la seconde puissance divisée par la première puissance, et soustraction du rapport calculé de 1 ;
lorsque le gain calculé est supérieur ou égal à un gain prédéterminé, la sortie du gain calculé ; et
lorsque le gain calculé est inférieur au gain prédéterminé, la sortie du gain prédéterminé ; et

l'élimination du bruit des signaux d'entrée par multiplication des signaux d'entrée par le gain délivré en sortie.

**13.** Programme de traitement de signal comprenant des instructions qui, lorsqu'elles sont exécutées par un ordinateur, amènent l'ordinateur à exécuter un procédé de traitement de signal selon la revendication 11 ou la revendication 12.

EP 2 608 201 B1

# FIG.1

SIGNAL PROCESSING APPARATUS — 100

RATIO CALCULATOR — 140

DETERMINATION UNIT — 150

POWER CALCULATOR — 130a

POWER CALCULATOR — 130b

GAIN CALCULATOR — 160

ADDER — 110

SUBTRACTER — 120

MICROPHONE — 10a

MICROPHONE — 10b

NOISE SUPPRESSION UNIT — 170

21

# FIG.2

START

CALCULATE ADDED VALUE p(t) OBTAINED BY ADDING TOGETHER INPUT SIGNALS Lin(t) AND Rin(t) OF MICROPHONES  $\sim$ S101

CALCULATE SUBTRACTED VALUE m(t) OBTAINED BY SUBTRACTING INPUT SIGNAL Rin(t) OF ONE MICROPHONE FROM INPUT SIGNAL Lin(t) OF THE OTHER MICROPHONE  $\sim$ S102

CALCULATE POWER Ppow(t) BASED ON ADDED VALUE p(t)  $\sim$ S103

CALCULATE POWER Mpow(t) BASED ON SUBTRACTED VALUE m(t)  $\sim$ S104

CALCULATE RATIO v(t)  $\sim$ S105

DETERMINE WHETHER NOISE IS INCLUDED  $\sim$ S106

CALCULATE GAIN g(t) BASED ON RATIO v(t)  $\sim$ S107

OUTPUT OUTPUT SIGNALS Lout(t) AND Rout(t) WHOSE NOISE IS SUPPRESSED BASED ON GAIN g(t)  $\sim$ S108

END

# FIG.3

g(t)  20A
SAMPLING NUMBER

g(t)  20B
SAMPLING NUMBER

# FIG.4

# FIG.5

START

DETECT MAXIMUM VALUE OF CORRELATION COEFFICIENT c(d) BETWEEN INPUT SIGNALS Lin(t) AND Rin(t) AND CALCULATE DELAY AMOUNTS dL AND dR FOR SYNCHRONIZATION ～S201

CALCULATE p(t) BY PERFORMING SYNCHRONOUS ADDITION ～S202

CALCULATE m(t) BY PERFORMING SYNCHRONOUS SUBTRACTION ～S203

CALCULATE POWER Ppow(t) BASED ON ADDED VALUE p(t) ～S204

CALCULATE POWER Mpow(t) BASED ON SUBTRACTED VALUE m(t) ～S205

CALCULATE RATIO v(t) ～S206

DETERMINE WHETHER NOISE IS INCLUDED ～S207

CALCULATE GAIN g(t) BASED ON RATIO v(t) ～S208

OUTPUT OUTPUT SIGNALS Lout(t) AND Rout(t) WHOSE NOISE IS SUPPRESSED BASED ON GAIN g(t) ～S209

END

# FIG.6

# FIG.7

START

CALCULATE LIN(i, f) AND RIN(i, f) BY PERFORMING FOURIER TRANSFORM ON INPUT SIGNALS Lin(t) AND Rin(t) OF MICROPHONES — S301

CALCULATE ADDED VALUE p(i, f) OBTAINED BY ADDING TOGETHER INPUT SIGNALS LIN(i, f) AND RIN(i, f) OF MICROPHONES — S302

CALCULATE SUBTRACTED VALUE m(i, f) OBTAINED BY SUBTRACTING INPUT SIGNAL RIN(i, f) OF ONE MICROPHONE FROM INPUT SIGNAL LIN(i, f) OF THE OTHER MICROPHONE — S303

CALCULATE POWER Ppow(i, f) BASED ON ADDED VALUE p(i, f) — S304

CALCULATE POWER Mpow(i, f) BASED ON SUBTRACTED VALUE m(i, f) — S305

CALCULATE RATIO v(i, f) — S306

DETERMINE WHETHER NOISE IS INCLUDED — S307

CALCULATE GAIN g(i, f) BASED ON RATIO v(i, f) — S308

OUTPUT OUTPUT SIGNALS LOUT(i, f) AND ROUT(i, f) WHOSE NOISE IS SUPPRESSED BASED ON GAIN g(i, f) — S309

PERFORM INVERSE FOURIER TRANSFORM ON OUTPUT SIGNALS LOUT(i, f) AND ROUT(i, f) AND OUTPUTS Lout(t) AND Rout(t) — S310

END

# FIG.8

# FIG.9

EP 2 608 201 B1

# FIG.10

**REFERENCES CITED IN THE DESCRIPTION**

**Patent documents cited in the description**

- JP 2004289762 A
- JP 2009005133 A
- US 2008212794 A1
- US 4334740 A
- EP 1940196 A1